# EUROPÄISCHE PATENTSCHRIFT

(11) **EP 4 313 727 B1**
(45) Veröffentlichungstag und Bekanntmachung des Hinweises auf die Patenterteilung: **15.10.2025**
(21) Anmeldenummer: 22718663.2
(22) Anmeldetag: 28.03.2022
(51) Int. Cl.: B62D 1/181

(54) **VERSTELLANTRIEB FÜR EINE LENKSÄULE UND LENKSÄULE FÜR EIN KRAFTFAHRZEUG**
ADJUSTMENT DRIVE FOR A STEERING COLUMN, AND STEERING COLUMN FOR A MOTOR VEHICLE
ENTRAÎNEMENT DE RÉGLAGE DESTINÉ À UNE COLONNE DE DIRECTION ET COLONNE DE DIRECTION DESTINÉE À VÉHICULE À MOTEUR

(30) Priorität: 30.03.2021 DE 102021203154
(43) Veröffentlichungstag der Anmeldung: 07.02.2024
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2022/058055
(87) Internationale Veröffentlichungsnummer: WO 2022/207530

(56) Entgegenhaltungen:
- DE-A1- 102017 218 894
- JP-A- 2002 002 501
- US-A1- 2015 183 455

## Beschreibung

### Stand der Technik

Die Erfindung betrifft einen Verstellantrieb für eine motorisch verstellbare Lenksäule für ein Kraftfahrzeug, umfassend eine in eine Spindelmutter eingreifende Gewindespindel mit einer Achse, und eine Antriebseinheit mit einem Riementrieb, der einen von einem Motor umlaufend antreibbaren Riemen aufweist, der um eine umfangsseitige Riemenlauffläche eines drehfest mit der Spindelmutter oder der Gewindespindel verbundenen Riemenrads läuft, welches in einer Lageranordnung um die Achse drehbar gelagert ist, die mindestens einen axial an dem Riemenrad angebrachten Lagerring aufweist. Eine Lenksäule mit mindestens einem derartigen Verstellantrieb ist ebenfalls Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Manteleinheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit in Höhenrichtung schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Motor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um die Gewindespindelachse drehend antreibbar, wodurch die Gewindespindel und die Spindelmutter je nach Drehrichtung translatorisch aufeinander zu oder voneinander wegbewegt werden können. In einer Ausführungsform ist die Gewindespindel von der Antriebseinheit, die feststehend mit der Stelleinheit oder der Trageinheit verbunden ist, drehend antreibbar und greift in die Spindelmutter ein, die an der Trageinheit oder alternativ an der Stelleinheit bezüglich Drehung um die Gewindespindelachse feststehend angebracht ist. In Richtung der Gewindespindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Gewindespindelachse bewirkt. Diese Ausführung wird daher auch als Rotationsspindelantrieb bezeichnet.

In einer alternativen Ausführungsform ist die Gewindespindel bezüglich Drehung um ihre Gewindespindelachse unverdrehbar mit der Trageinheit oder alternativ mit der Stelleinheit gekoppelt und die Spindelmutter ist drehbar, aber in Richtung der Gewindespindelachse feststehend entsprechend an der Stelleinheit oder alternativ an der Trageinheit gelagert. Wie in der ersten Ausführungsform stützt sich in Richtung der Gewindespindelachse die Gewindespindel an der Trageinheit oder an der Stelleinheit ab, und die Spindelmutter entsprechend an der Stelleinheit oder an der Trageinheit, so dass die Gewindespindel in Richtung der Gewindespindelachse translatorisch verschiebbar ist, indem die Spindelmutter von der Antriebseinheit drehend angetrieben wird. Diese Ausführung wird als Tauchspindelantrieb bezeichnet.

Durch den rotatorischen Antrieb der Gewindespindel wird wie bei der erstgenannten Ausführung eine translatorische Verstellung von Trageinheit und Stelleinheit relativ zueinander in Richtung der Gewindespindelachse bewirkt. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann.

Zur Realisierung einer Längsverstellung der Stelleinheit in Richtung der Längsachse der Lenkspindel kann der Spindeltrieb eines Verstellantriebs zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Gewindespindelachse im Wesentlichen parallel zur Längsachse ausgerichtet sein kann. Zur Höhenverstellung kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Der Antrieb des Spindeltriebs erfolgt bei einem Verstellantrieb der eingangs genannten Art über einen Riementrieb, bei dem von dem Motor ein als Riemenscheibe ausgebildetes Antriebsrad drehend antreibbar ist, das über einen umlaufenden Riemen mit einem Riemenrad antriebsmäßig gekoppelt ist, welches je nach Ausführung des Spindeltriebs mit der Spindelmutter oder mit der Gewindespindel drehfest verbunden ist. Das Riemenrad weist eine außen umlaufende Riemenlauffläche auf, die bei einem Zahnriementrieb eine Verzahnung aufweisen kann. Im Stand der Technik ist ein derartiger Verstellantrieb beispielsweise in der DE 10 2017 218 894 A1 beschrieben. Ein prinzipieller Vorteil des Riementriebs ist die hohe Laufruhe und das relativ geringe Gewicht. Im Betrieb können jedoch beispielsweise durch Lastwechsel Querkräfte auftreten, welche das Betriebsverhalten potentiell beeinträchtigen können.

Aus der US 2015/0183455 A1 ist ein Verstellantrieb der eingangs genannten Art bekannt. Angesichts dessen ist es eine Aufgabe der vorliegenden Erfindung, bei einem riemengetriebenen motorischen Verstellantrieb ein verbessertes Betriebsverhalten zu ermöglichen, und das Betriebsverhalten einer Lenksäule mit einem derartigen Verstellantrieb optimieren zu können.

### Darstellung der Erfindung

Diese Aufgabe wird erfindungsgemäß gelöst durch den Verstellantrieb mit den Merkmalen des Anspruchs 1 und die Lenksäule gemäß Anspruch 10. Vorteilhafte Weiterbildungen ergeben sich aus den Unteransprüchen.

Bei einem Verstellantrieb für eine motorisch verstellbare Lenksäule für ein Kraftfahrzeug, umfassend eine in eine Spindelmutter eingreifende Gewindespindel mit einer Achse, und eine Antriebseinheit mit einem Riementrieb, der einen von einem Motor umlaufend antreibbaren Riemen aufweist, der um eine umfangsseitige Riemenlauffläche eines drehfest mit der Spindelmutter oder der Gewindespindel verbundenen Riemenrads läuft, welches in einer Lageranordnung um die Achse drehbar gelagert ist, die mindestens einen axial an dem Riemenrad angebrachten Lagerring aufweist, ist erfindungsgemäß vorgesehen, dass der Lagerring einen radial über die Riemenlauffläche vorstehenden Bordscheibenabschnitt aufweist, der die Breite der Riemenlauffläche begrenzt.

Das Riemenrad wird im Folgenden gleichbedeutend auch als Riemenscheibe bezeichnet.

Ein erfindungsgemäßer axialer Lagerring ermöglicht eine optimierte Abstützung der im Betrieb über die Gewindespindel auf das Riemenrad ausgeübten axialen Lagerkräfte, beispielsweise durch Übertragung der auf das Riemenrad wirkenden Axialkräfte auf ein axiales Widerlager, welches beispielsweise als Außenlagerring an oder in einem Lagergehäuse angebracht oder ausgebildet ist. Über dieses Lagergehäuse kann eine axiale Abstützung der von dem Motor drehend angetriebenen Spindelmutter oder der Gewindespindel erfolgen. Je nach Bauform der Lageranordnung kann der Lagerring hinsichtlich seiner Dimensionierung und seines Materials optimiert werden, um eine leichtgängige Rotation des Riemenrades zu gewährleisten und gleichzeitig ein geringes Lagerspiel bei einer optimierten Stütz- und Lagergeometrie zu ermöglichen. Auf diese Weise kann eine verbesserte Laufruhe, insbesondere bei den im Betrieb auftretenden Lastwechseln, und ein geringer Verschleiß realisiert werden, wodurch ein langfristig verbessertes Betriebsverhalten erreicht werden kann.

Zusätzlich bildet der radial, d.h. bezüglich der Achse nach außen über die Riemenlauffläche überstehende Bordscheibenabschnitt eine seitliche Begrenzung der Riemenlauffläche, mit anderen Worten eine definierte axiale Begrenzung der möglichen seitlichen Bewegung des Riemens auf der Riemenlauffläche. Bezüglich der Riemenlauffläche springt der Bordscheibenabschnitt vorzugsweise stufenförmig nach außen vor, und hat mit anderen Worten einen größeren Außendurchmesser als der kleinste Durchmesser der Riemenlauffläche. Der Bordscheibenabschnitt hat somit zumindest über einen Umfangsteilbereich, bevorzugt über den gesamten Umfang durchgehend, eine gegen die axiale Position der Riemenlauffläche gerichtete axiale Anschlagfläche bzw. Axialfläche. Dadurch wir der axiale Bereich klar definiert, in dem sich der Riemen im Betrieb in axialer Richtung relativ zum Riemenrad bewegen kann, d.h. in der er seitlich quer zu seiner Umlaufrichtung wandern kann, bis er an der Anschlagfläche des Bordscheibenabschnitts anschlägt. Falls der Riemen im Betrieb nach einer Vielzahl von Umdrehungen zum seitlichen, axialen Rand der Riemenlauffläche hin wandert, beispielsweise bei einer Verstellung der Lenksäule über den vollständigen Verstellweg, wird er durch Anschlag (Anlaufen) am Bordscheibenabschnitt sicher seitlich geführt und auf der Riemenlauffläche gehalten. Mit anderen Worten kann durch den Bordscheibenabschnitt die in axialer Richtung gemessene Breite der Riemenlauffläche eindeutig begrenzt und definiert werden. Dadurch kann eine übermäßige Schrägstellung des Riemens verhindert und nachteilige Reibung reduziert werden, was eine erhöhte Laufruhe und einen geringeren Verschleiß ermöglicht, so dass das Betriebsverhalten insgesamt verbessert wird.

Ein Vorteil der Erfindung ist, dass der Lagerring eine Doppelfunktion bezüglich einer optimierten Lagerung des Riemenrads und einer optimierten Führung des Riemens auf dem Riemenrad hat. Dadurch wird eine funktionale Verbesserung mit geringem konstruktiven Aufwand bei kompakten Abmessungen und geringem Gewicht ermöglicht.

Bevorzugt kann der Bordscheibenabschnitt als durchgehend ringscheibenförmige Bordscheibe ausgebildet sein, die einen größeren Außendurchmesser hat als die Riemenlauffläche.

In einer vorteilhaften Ausführung kann vorgesehen sein, dass zwei Lagerringe axial beiderseits der Riemenlauffläche angeordnet sind. Jeweils einer der beiden Lagerringe kann hierzu jeweils stirnseitig an dem Riemenrad angeordnet sein. Dadurch befindet sich die Riemenlauffläche zwischen den in axialer Richtung einander gegenüberliegenden, radial über die Riemenlauffläche vorstehenden Anschlagflächen der Bordscheibenabschnitte. Auf diese Weise wird die Breite der Riemenlauffläche begrenzt, gemessen zwischen den axialen Anschlagflächen der Bordscheiben. Dadurch, dass die Breite der Riemenlauffläche mit geringem seitlichen Spiel an die Riemenbreite angepasst wird, kann eine optimierte Führung des Riemens im Betrieb realisiert werden, so dass in vorteilhafter Weise unerwünschte Geräuschbildung und Verschleiß reduziert werden.

Es ist vorteilhaft, dass die Riemenscheibe (Riemenrad) eine umlaufende Verzahnung aufweist, über die der Bordscheibenabschnitt radial vorsteht. Der Riementrieb ist als Zahnriementrieb ausgebildet, und entsprechend Riemen als Zahnriemen und Riemenscheibe als korrespondierende Zahnriemenscheibe. Der Zahnriementrieb ermöglich eine schlupfarme und laufruhige Drehmomentübertragung von einem an die Motorwelle des elektrischen Motors gekuppelten Antriebsrads auf das erfindungsgemäße Riemenrad, welches wie das Antriebsrad als Zahnriemenrad ausgebildet ist. Durch die erfindungsgemäßen Bordscheibenabschnitte wird der Zahnriemen sicher auf der verzahnten Riemenlauffläche geführt, wodurch die Laufruhe erhöht, und Reibung und Verschleiß reduziert werden.

Bevorzugt kann die Lageranordnung zwischen dem Riemenrad und einem Lagergehäuse ausgebildet sein. In dem Lagergehäuse ist die Spindelmutter oder die Gewindspindel samt Riemenrad drehbar gelagert. Das Lagergehäuse kann ein Antriebsgehäuse des Riementriebs sein oder einen Teil davon bilden, an dem der Motor angebracht ist. Außerdem kann das Lagergehäuse zur Anbringung des Verstellantriebs an der Lenksäule ausgestaltet sein. Die bevorzugt auf beiden axialen Stirnseiten des Riemenrads angeordneten Lagerringe können mit ihren axialen Außenseiten gegen korrespondierende stirnseitige Lagerflächen von Außenlagerringen axial abgestützt und drehbar gelagert sein, die an dem Lagergehäuse angebracht sind. Dadurch, dass die Riemenscheibe über die Lagerringe in beiden Axialrichtungen gegen die Außenlagerringe abgestützt ist, kann eine laufruhige Lagerung mit geringem Lagerspiel realisiert werden. Dabei wird der Riemen durch die Bordscheibenabschnitte geführt und auf Distanz zu den Lagerflächen und sonstigen Innenflächen des Lagergehäuses gehalten, so dass in vorteilhafter Weise die Laufruhe erhöht und gleichzeitig Reibung und Verschleiß reduziert werden.

Eine vorteilhafte Ausführung kann vorsehen, dass die Lageranordnung ein Wälzlager umfasst, wobei der Lagerring als Laufring des Wälzlagers ausgebildet ist. Um die an sich bekannten Vorteile einer Wälzlagerung wie eine hohe Laufruhe bei geringen Verschleiß zu realisieren, können zwischen bevorzugt beidseitig an dem Riemenrad angeordneten Lagerringen und damit korrespondierenden Außenlagerringen des Lagergehäuses abrollbare Wälzkörper angeordnet sein, beispielsweise Kugeln oder Rollen. Ein erfindungsgemäßer Lagerring weist auf seiner äußeren, dem Riemenrad angewandten Stirnseite eine Wälzkörperlaufbahn auf, beispielsweise eine Kugellaufbahn, und auf seiner dem Riemenrad zugewandten Stirnseite eine Anschlagfläche zur Begrenzung der Riemenlauffläche. Dadurch hat der Lagerring in dieser Ausführung eine Doppelfunktion als Teil eines Wälzlagers und als Bordscheibe zur Führung des Riemens, was eine kompakte Bauform bei relativ geringem Konstruktions- und Fertigungsaufwand ermöglicht.

Die Wälzlager können bevorzugt als Schrägwälzlager ausgebildet sein, bei denen die Abrollflächen der Wälzkörper - beispielsweise die genähert punktförmigen Kontaktflächen von Kugeln - am Lager- und Außenlagerring jeweils auf einer schräg zur Achse stehenden Verbindungslinie liegen. Derartige Schrägwälzlager ermöglichen eine spielarme und robuste Lagerung bei gleichzeitiger axialer und radialer Lastaufnahme. Dabei können die beiderseits des Riemenrads angeordneten Wälzlager eine X-Anordnung bilden, bei der sich die Schnittpunkte der Verbindungslinien mit der Achse zwischen den Lagern befinden, oder auch eine O-Anordnung, bei der sich die Schnittpunkte der Verbindungslinien mit der Achse außerhalb der Lageranordnung befinden. Die erfindungsgemäßen Vorteile der optimierten Riemenführung durch die Bordscheibenabschnitte können bei den unterschiedlichen Lageranordnungen gleichermaßen vorteilhaft realisiert werden.

Es ist möglich, dass das Riemenrad einen Nabenkörper aufweist, mit dem mindestens ein Lagerring verbunden ist. Der Nabenkörper weist bevorzugt die Riemenlauffläche auf. Bei einem Tauchspindelantrieb weist der Nabenkörper das Innengewinde der Spindelmutter auf, welches einstückig ausgebildet sein kann, oder in einer eingesetzten oder außen angebrachten Gewindebuchse. Bei einem Drehspindelantrieb ist der Nabenkörper axial fest und drehfest mit der Gewindespindel verbunden, beispielsweise durch eine einstückige Ausbildung, oder durch eine drehfeste Verbindung.

In einer vorteilhaften Ausführung können der oder die Lagerringe und der Nabenkörper aus unterschiedlichen Materialien ausgebildet sein. Dadurch können die Materialeigenschaften optimal an die spezifischen Belastungen und Anforderungen im Betrieb angepasst werden. Hierzu können der oder die Lagerringe und Nabenkörper zunächst separat gefertigt werden, bevorzugt aus unterschiedlichen Materialien, und anschließend mittels geeigneter Fügeverfahren miteinander verbunden werden. Auf diese Weise kann eine weitere Optimierung der Betriebseigenschaften erfolgen.

Es kann vorteilhaft sein, dass der Nabenkörper ein Kunststoffmaterial und/oder ein Metall aufweist. Ein Kunststoffmaterial, beispielsweise ein thermoplastisches Polymer, ermöglicht eine rationelle Fertigung im Kunststoff-Spritzguss, wobei eine große konstruktive Freiheit und ein geringes Gewicht realisierbar sind. Dabei kann eine außen umlaufende Verzahnung als Riemenlauffläche eines Zahnriemens mit geringem Aufwand integriert werden, wobei die Materialeigenschaften des Kunststoffmaterials auf den Riemen abgestimmt werden können, um Laufeigenschaften und Verschleiß zu optimieren, insbesondere bei einem Zahnriementrieb. Außerdem kann der Nabenkörper rationell durch Anspritzen mit einer Gewindespindel verbunden sein, oder mit einer eingesetzten Gewindebuchse einer Spindelmutter. Es ist alternativ auch denkbar, das Innengewinde der Spindelmutter in dem Kunststoff des Spritzgussteils integriert auszubilden. Alternativ kann der Nabenkörper zumindest teilweise aus einem metallischen Material ausgebildet sein, beispielsweise als Press- oder Druckgussteil, beispielsweise aus Aluminium-, Magnesium- oder Buntmetalllegierungen oder dergleichen. Es ist auch eine Verbundbauweise aus Kunststoff und metallischen Werkstoffen möglich, um vorteilhafte Eigenschaften der unterschiedlichen Materialien zu kombinieren.

Es kann mit Vorteil vorgesehen sein, dass der Lagerring ein Blechformteil aufweist. Ein Lagerring kann beispielsweise rationell als Press-Stanz-Teil aus Stahlblech gefertigt sein, oder einem anderen, bevorzugt metallischen Material, welches eine höhere Festigkeit und/oder Härte aufweist als das Material des Nabenkörpers. Dies ermöglicht eine raumsparende und dabei belastbare und verschleißarme Bauform, welche beispielsweise auch gut geeignet ist zur Ausbildung eines Wälzlager-Lagerrings.

Separat zur Verfügung gestellte Lagerringe können bevorzugt beidseitig axial an den Stirnseiten eines Nabenkörpers angebracht sein, bevorzugt mittels einer unlösbaren Verbindung. Diese kann beispielsweise eine formschlüssige Verbindung, und zusätzlich oder alternativ eine stoffschlüssige Verbindung umfassen, beispielsweise eine Schweiß- oder Klebeverbindung. Es ist auch denkbar und möglich, einen Nabenkörper aus Kunststoff im Spritzgussverfahren an Lagerringe anzuspritzen.

Es ist möglich, dass eine Sensoreinrichtung zur Erfassung der Rotation der Riemenscheibe vorgesehen ist. Die Sensoreinrichtung kann eine eine elektronische Sensoranordnung umfassen, beispielsweise einen Absolutwert- oder Inkrementalsensor, der bevorzugt nach einem kontaktlosen Messverfahren arbeitet, beispielsweise optisch, induktiv, kapazitiv oder dergleichen. Bevorzugt weist der Lagerring eine Geberanordnung auf, so dass mittels eines relativ dazu an dem Verstellantrieb feststehend angeordneten Sensors eine Drehwinkelerfassung ermöglicht ist. Dadurch ist eine Messung und Überwachung der Rotation der Spindelmutter oder der Gewindespindel möglich, so dass der Verstellweg des Spindeltriebs bestimmt werden kann. Außerdem kann eine Betriebsüberwachung erfolgen, beispielsweise durch Detektierung eines beschädigten Zahnriemens oder einer Blockierung.

Es kann in einer vorteilhaften Weiterbildung vorgesehen sein, dass der Lagerring umfänglich partiell magnetisiert ist, so dass die Sensoranordnung, beispielsweise ein Hallsensor, dies detektieren kann. Bevorzugt ist die Magnetisierung im Bordscheibenabschnitt vorgesehen. Dabei wechseln sich in Umfangsrichtung bezogen auf die Achse der Gewindespindel magnetisierte Bereiche mit unmagnetisierten Bereichen alternierend ab. Alternativ wechseln sich in Umfangsrichtung bezogen auf die Achse der Gewindespindel magnetisierte Nordpolbereiche mit magnetisierten Südpolbereichen alternierend ab.

Alternativ oder zusätzlich kann der Lagerring, bevorzugt im Bordscheibenabschnitt über den Umfang verteilte Öffnungen oder Ausnehmungen aufweisen, die durch die Sensoranordnung detektiert werden. Bevorzugt sind die Öffnungen oder Ausnehmungen gleichmäßig über den Umfang bezogen auf die Achse der Gewindespindel angeordnet sein. Mit anderen Worten bildet der Lagerring eine Art Lochscheibe, die mittels eines optischen Sensors detektierbar ist. Alternativ zu Öffnungen oder Ausnehmungen kann der Lagerring, bevorzugt dessen Bordscheibenabschnitt, über den Umfang verteilte Bereiche verfügen, die unterschiedliche Reflexionseigenschaften haben. Diese bilden eine Art Muster, das durch die Sensoranordnung detektierbar ist.

Bevorzugt ist die Sensoranordnung mit einem Steuergerät verbunden, welches die durch die Sensoranordnung bereitgestellten Messwerte auswertet und weiterverarbeitet und bevorzugt an andere Komponenten weiterleitet. Bevorzugt ist die Sensoranordnung mit der gleichen Spannungsversorgung wie der Verstellantrieb verbunden. Dies ist kostengünstig und erspart eine zusätzliche Vekabelung.

Vorzugsweise können mindestens zwei, bevorzugt nach unterschiedlichen Messprinzipien arbeitende Sensoreinrichtungen vorgesehen sein. Dadurch kann eine redundante Messanordnung bereitgestellt werden, welche die Betriebs- und Ausfallsicherheit erhöht, und gegebenenfalls auch eine höhere Messgenauigkeit ermöglichen kann.

Weiterhin betrifft die Erfindung eine motorisch verstellbare Lenksäule für ein Kraftfahrzeug, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, wobei der Verstellantrieb eine in eine Spindelmutter eingreifende Gewindespindel mit einer Achse, und eine Antriebseinheit mit einem Riementrieb, der einen von einem Motor umlaufend antreibbaren Riemen aufweist, der um eine umfangsseitige Riemenlauffläche eines drehfest mit der Spindelmutter oder der Gewindespindel verbundenen Riemenrads läuft, welches in einer Lageranordnung um die Achse drehbar gelagert ist, wobei erfindungsgemäß vorgesehen ist, dass der Verstellantrieb ausgebildet ist gemäß einer der vorangehend beschriebenen Ausführungen oder Kombinationen davon.

Bei der Lenksäule kann jeweils ein erfindungsgemäßer Verstellantrieb zur Längsverstellung und zusätzlich oder alternativ zur Höhenverstellung vorgesehen sein. Dadurch kann die Verstellung der Lenksäule laufruhig und betriebssicher erfolgen, und es kann ein relativ geringes Gewicht realisiert werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Darstellung einer erfindungsgemäßen elektrisch verstellbaren Lenksäule;
- Figur 2: die Lenksäule gemäß Figur 1 in einer weiteren perspektivischen Ansicht;
- Figur 3: einen erfindungsgemäßen Verstellantrieb in einer schematischen perspektivischen Ansicht,
- Figur 4: einen Querschnitt A-A durch den Verstellantrieb gemäß Figur 3,
- Figur 5: einen Längsschnitt durch einen Verstellantrieb gemäß Figur 3,
- Figur 6: einen Längsschnitt durch einen Verstellantrieb gemäß Figur 3 in einer zweiten Ausführung,
- Figur 7: einen Längsschnitt durch einen erfindungsgemäßen Verstellantrieb in einer dritten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

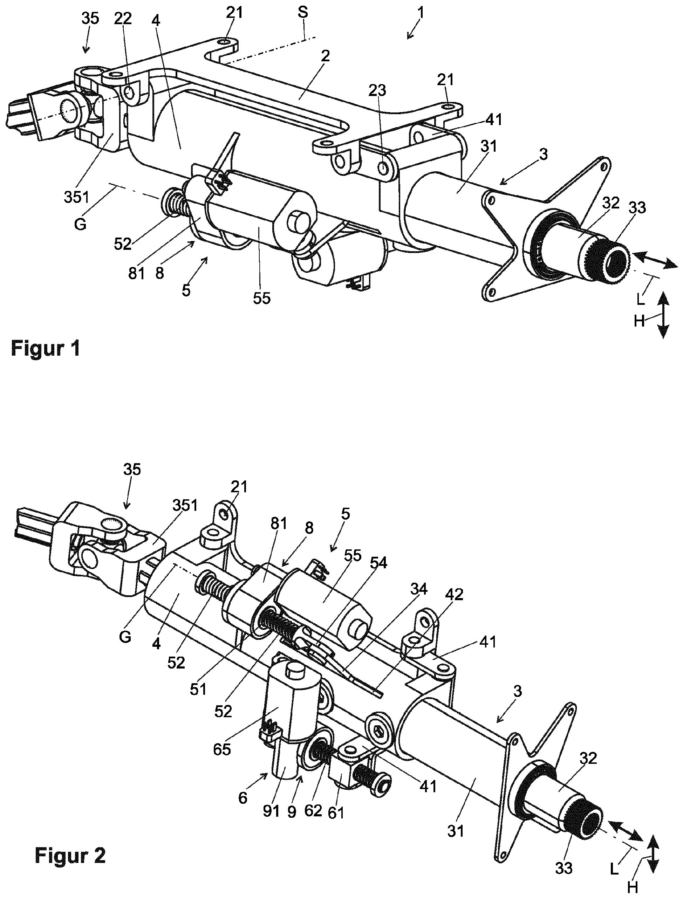

Figur 1 zeigt eine erfindungsgemäße Lenksäule 1 in einer schematischen perspektivischen Ansicht von oben schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt dieselbe Lenksäule 1 in einer Ansicht von schräg unten gesehen.

Die Lenksäule 1 umfasst eine Trageinheit 2, welche als Konsole ausgebildet ist, die Befestigungsmittel 21 in Form von Befestigungsbohrungen aufweist zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist. Am vorderen Ende ist die Lenkspindel 32 mit einer Gabel 351 eines Universalgelenks 35 drehmomentschlüssig verbunden.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet ist.

Ein erster Verstellantrieb 5 zur Längsverstellung der Stelleinheit 3 relativ zur Manteleinheit 4 in Richtung der Längsachse L weist einen Spindeltrieb mit einer Spindelmutter 51 mit einem Innengewinde auf, in das eine sich längs einer Gewindespindelachse G, auch kurz als Achse G bezeichnet, erstreckende Gewindespindel 52, auch kurz als Spindel 52 bezeichnet, eingreift, also mit ihrem Außengewinde in das korrespondierende Innengewinde der Spindelmutter 51 eingeschraubt ist. Die Achse G der Gewindespindel 52 verläuft im Wesentlichen parallel zur Längsachse L.

Die Spindelmutter 51 ist in einem Lagergehäuse 81 eines Getriebes 8 um die Achse G drehbar gelagert, welches fest mit der Manteleinheit 4 verbunden ist. In Richtung der Achse G ist die Spindelmutter 51 axial über das Lagergehäuse 81 an der Manteleinheit 4 abgestützt, wie weiter unten noch näher erläutert wird.

Die Gewindespindel 52 ist mit einem an ihrem hinteren Ende ausgebildeten Befestigungselement 54 über ein Übertragungselement 34 mit der Stelleinheit 3 verbunden, und zwar fest in axialer Richtung, also in Richtung der Achse G bzw. der Längsachse L und feststehend bezüglich Drehung um die Achse G. Durch die drehend antreibbare Spindelmutter 51 und die bezüglich Drehung um die Achse G feststehende Gewindespindel 52 wird ein sogenannter Tauchspindelantrieb realisiert.

Wie Figur 2 entnehmbar ist, erstreckt sich das Übertragungselement 34 von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist einen elektrischen Motor 55 auf, von dem die Spindelmutter 51 bezüglich der Achse G relativ zur feststehenden Gewindespindel 52 drehend antreibbar ist. Dadurch kann - je nach Drehrichtung des Motors 55 - die Gewindespindel 52 in Richtung der Achse G translatorisch relativ zur Spindelmutter 51 verlagert werden, so dass entsprechend die mit der Gewindespindel 52 verbundene Stelleinrichtung 3 relativ zu der mit der Spindelmutter 51 verbundenen Manteleinheit 4 in Richtung der Längsachse L verstellt wird. Der Antrieb der Spindelmutter 51 wird weiter unten noch detailliert erläutert.

In Figur 2 ist weiterhin erkennbar, wie ein zweiter Verstellantrieb 6 zur Verstellung in Höhenrichtung H an der Lenksäule 1 angebracht ist. Dieser Verstellantrieb 6 umfasst eine Spindelmutter 61, in deren Innengewinde 74 längs einer Achse G eine Gewindespindel 62 eingreift. Der Verstellantrieb 6 weist ein Getriebe 9 auf, in dem die Gewindespindel 62 in einem Getriebegehäuse 91, welches an der Manteleinheit 4 befestigt ist, um die Achse G drehbar gelagert und axial, d.h. in Richtung der Achse G, an der Manteleinheit 4 abgestützt ist. Von einem elektrischen Motor 65 ist die Gewindespindel 62 wahlweise in beide Rotationsrichtungen um ihre Achse G drehend antreibbar.

Die Spindelmutter 61 ist bezüglich einer Drehung um die Achse G feststehend an einem Ende des zweiarmigen Stellhebels 41 angebracht, der um ein Schwenklager 23 drehbar an der Trageinheit 22 gelagert ist, und dessen anderer Arm mit dem anderen Ende mit der Manteleinheit 4 verbunden ist.

Durch Drehung der Gewindespindel 61 kann - je nach Drehrichtung des Motors 65 - die Spindelmutter 61 in Richtung der Gewindespindelachse G translatorisch relativ zur Gewindespindel 62 verlagert werden, so dass entsprechend die über den Stellhebel 41 mit der Spindelmutter 61 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

Durch die drehend antreibbare Gewindespindel 62 und die bezüglich Drehung feststehende Spindelmutter 61 wird ein sogenannter Rotationsspindelantrieb realisiert.

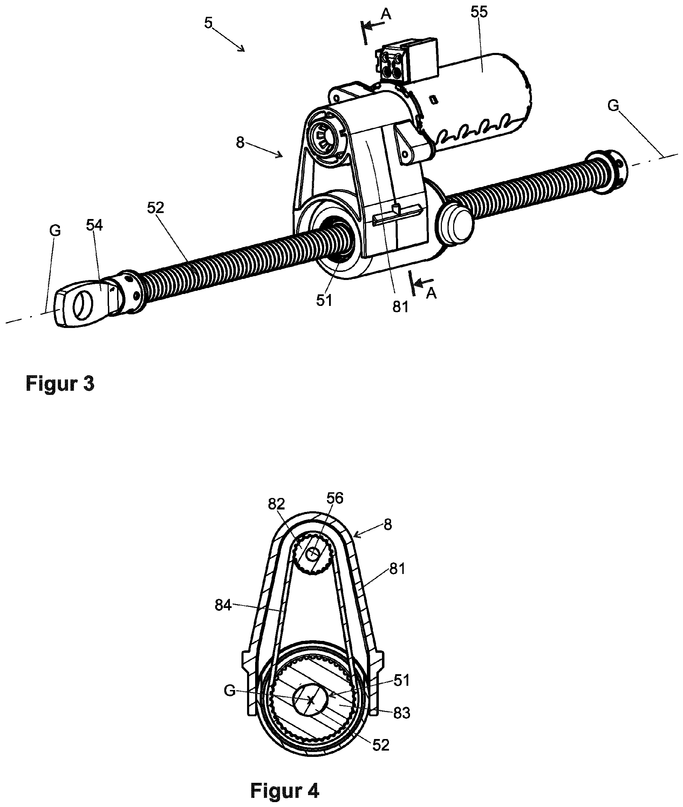

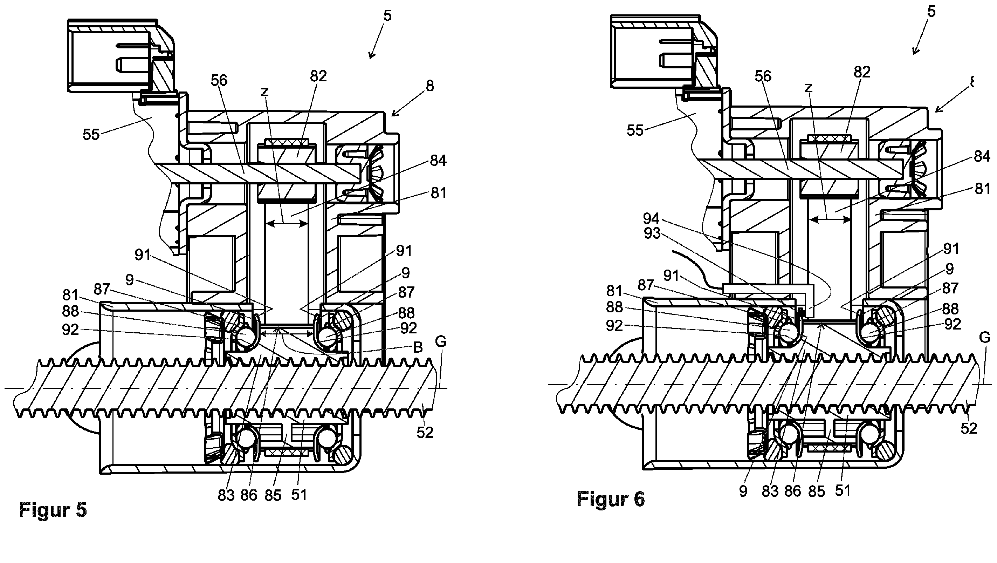

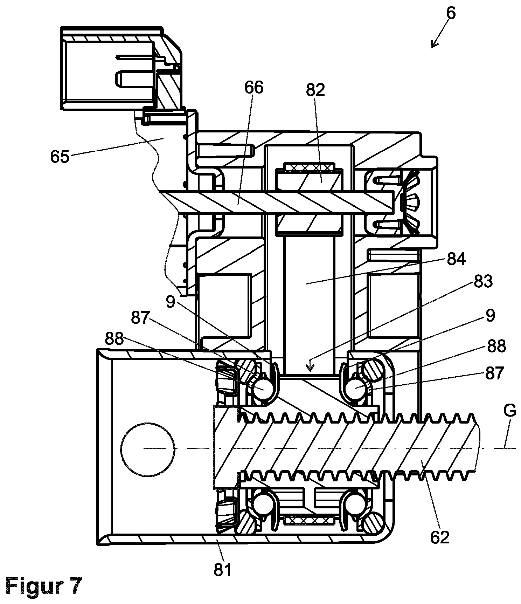

Die vorliegende Erfindung bezieht sich auf einen Verstellantrieb 5, bei dem das Getriebe 8 zur Drehmomentübertragung vom Motor 55 auf die Spindelmutter 51 erfindungsgemäß als Zahnriemengetriebe 8 ausgestaltet ist. Ein derartiger Verstellantrieb 5 ist von der Lenksäule 1 gelöst in Figur 3 in einer perspektivischen Ansicht gezeigt, in Figur 4 in einem Querschnitt A-A durch das Getriebe 8 senkrecht zur Achse G, und in Figur 5 in einem Längsschnitt entlang der Achse G. Figur 6 zeigt eine Weiterbildung des Verstellantriebs 5 gemäß Figur 5 in derselben Ansicht. In derselben Ansicht wie in Figur 5 ist in Figur 7 eine abgewandelte Ausführung dargestellt, die im Unterschied zu dem in den Figuren 4 bis 7 dargestellten Tauchspindelantrieb als Rotationsspindelantrieb ähnlich dem Verstellantrieb 6 ausgestaltet ist.

Für gleichwirkende Teile finden auch für die unterschiedlichen Ausführungen dieselben Bezugszeichen Verwendung.

Das Riemengetriebe 8 umfasst ein auf der Motorwelle 56 des Motors 55 angebrachtes, als Zahnriemenscheibe ausgebildetes Antriebsrad 82, ein drehfest mit der Spindelmutter 51 verbundenes, ebenfalls als Zahnriemenscheibe ausgebildetes Riemenrad 83, und einem um das Antriebsrad 82 und das Riemenrad 83 umlaufenden Zahnriemen 84. Diese Anordnung ist deutlich in Figur 4 erkennbar.

Die Spindelmutter 51 ist in dem gezeigten Beispiel mit dem Riemenrad 83 integriert ausgebildet. Wie in Figur 5 erkennbar ist, umfasst das Riemenrad 83 einen Nabenkörper 85, der einstückig mit der Spindelmutter 51 ausgebildet ist, und beispielsweise als Kunststoff-Spritzgussteil ausgebildet sein kann. Der Nabenkörper 85 weist eine außen umlaufende Verzahnung 86 auf, die axial, in Richtung der Achse G gemessen, eine Breite B hat, und die umfangsseitige Riemenlauffläche für den Zahnriemen 84 bildet.

Der Zahnriemen 84 hat eine Breite z, die kleiner ist als die Breite B der Verzahnung.

Die Verzahnung 86 erstreckt sich zwischen axialen Stirnseiten des Nabenkörpers 83, wobei auf jeder dieser Stirnseiten jeweils ein erfindungsgemäßer, kreisringförmiger Lagerring 9 angebracht ist. Jeder Lagerring 9 weist einen von dem Nabenkörper 85 radial nach außen über die Verzahnung 86, und damit über die Riemenlauffläche vorstehenden Bordscheibenabschnitt 91 auf. Mit ihren axial gegeneinander gerichteten axialen Anschlagflächen begrenzen die Bordscheibenabschnitte 91 die Riemenlauffläche auf beiden Seiten, so dass der um den Nabenkörper 85 umlaufende Zahnriemen 84 zwischen den Bordscheibenabschnitten 91 geführt ist. Die gegeneinander gerichteten Anschlagflächen der Bordscheibenabschnitte 91 haben einen der Breite B der Riemenlauffläche 86 axialen Abstand.

Auf ihren bezüglich des Nabenkörpers 85 außenliegenden Axialseiten weisen die Lagerringe 9 jeweils eine umlaufende Kugellaufbahn 92 aus. Zwischen den Kugellaufbahnen 92 und relativ dazu an dem Lagergehäuse 81 axial abgestützten Außenlagerringen 87 sind als Wälzkörper Kugeln 88 in Umfangsrichtung abrollbar angeordnet. Dadurch bildet jeder Lagerring 9 zusammen mit dem Außenlagerring 87 und den Kugeln 88 jeweils ein Wälzlager, im konkreten Beispiel ein Schrägkugellager.

Die Lagerringe 9 können als Blechformteile ausgebildet sein, bevorzugt als Stanz-Pressteile aus Stahl. Diese weisen im Bereich der Kugellaufbahn 92 eine zum Abrollen der Kugeln 88 ausreichende Härte und Festigkeit auf.

Die Lagerringe 9 können bevorzugt fest und unlösbar mit dem Nabenkörper 85 verbunden sein, beispielsweise durch Verschweißen und/oder Verkleben mit dem Kunststoffmaterial des Nabenkörpers 85.

Die in Figur 6 dargestellte Ausführung ist gleichartig wie in Figur 5 aufgebaut. Zusätzlich weist der in der Zeichnung links angeordnete Lagerring 9 im Bereich seines Bordscheibenabschnitts 91 über den Umfang verteilte Geberelemente 93 auf, beispielsweise magnetische und/oder optische Markierungen oder dergleichen. Mittels eines fest an dem Lagergehäuse 81 angebrachten Sensorelements 94, das beispielsweise einen Hall-Sensor oder einen optischen Sensor oder dergleichen umfassen kann, können die Geberelemente 93 messtechnisch detektiert werden, um eine Drehung des Riemenrads 83 zu erfassen. Auf diese Weise wird eine Sensoranordnung mit einem Drehsensor zur Verfügung gestellt.

Bei der in Figur 7 gezeigten Ausführung handelt es sich um eine erfindungsgemäße Ausgestaltung eines Rotationsspindelantriebs, wie dem oben genannten Verstellantrieb 6 mit seiner von dem Motor 65 drehend antreibbaren Gewindespindel 62. Dabei kann das Zahnriemengetriebe 8 funktional im Wesentlichen gleich wie in Figur 5 ausgebildet sein. Der Unterschied besteht darin, dass der Nabenkörper 85 des Riemenrads 83 axial- und drehfest mit der Gewindespindel 62 verbunden ist, so dass diese über den Zahnriementrieb 8 drehend antreibbar ist.

### Bezugszeichenliste

- 1: Lenksäule
- 2: Trageinheit
- 21: Befestigungsmittel
- 22, 23: Schwenklager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 42: Durchgangsöffnung
- 5, 6: Verstellantrieb
- 51, 61: Spindelmutter
- 52, 62: Gewindespindel
- 54: Befestigungselement
- 55, 65: Motor
- 56, 66: Motorwelle (Antriebswelle) Schnecke
- 8: Getriebe (Zahnriemengetriebe)
- 81: Lagergehäuse
- 82: Antriebsrad
- 83: Riemenrad (Riemenscheibe)
- 84: Zahnriemen
- 85: Nabenkörper
- 86: Verzahnung (Riemenlauffläche)
- 87: Außenlagerring
- 88: Kugeln
- 9: Lagerring
- 91: Bordscheibenabschnitt
- 92: Kugellaufbahn
- L: Längsachse
- G: Achse
- B: Breite
- Z: Breite

## Patentansprüche

1. Verstellantrieb (6, 7) für eine motorisch verstellbare Lenksäule (1) für ein Kraftfahrzeug, umfassend eine in eine Spindelmutter (51, 61) eingreifende Gewindespindel (52, 62) mit einer Achse (G), und eine Antriebseinheit mit einem Riementrieb (8), der einen von einem Motor (55, 65) umlaufend antreibbaren Riemen (84) aufweist, der um eine umfangsseitige Riemenlauffläche (86) eines drehfest mit der Spindelmutter (52) oder der Gewindespindel (62) verbundenen Riemenrads (83) läuft, welches in einer Lageranordnung (87, 88, 9) um die Achse (G) drehbar gelagert ist, die mindestens einen axial an dem Riemenrad (83) angebrachten Lagerring (9) aufweist,
**dadurch gekennzeichnet,**
**dass** der Lagerring (9) einen radial über die Riemenlauffläche (86) vorstehenden Bordscheibenabschnitt (91) aufweist, der die Breite der Riemenlauffläche (86) begrenzt.

2. Verstellantrieb nach Anspruch 1, **dadurch gekennzeichnet, dass** zwei Lagerringe (9) axial beiderseits der Riemenlauffläche (86) angeordnet sind.

3. Verstellantrieb nach einem der vorangehenden Ansprüche, **dadurch gekennzeichnet, dass** die Riemenscheibe (83) eine umlaufende Verzahnung (86) aufweist, über die der Bordscheibenabschnitt (91) radial vorsteht.

4. Verstellantrieb nach einem der vorangehenden Ansprüche, **dadurch gekennzeichnet, dass** die Lageranordnung (87, 88, 9) zwischen dem Riemenrad (83) und einem Lagergehäuse (81) ausgebildet ist.

5. Verstellantrieb nach einem der vorangehenden Ansprüche, **dadurch gekennzeichnet, dass** die Lageranordnung (97, 88, 9) ein Wälzlager umfasst, wobei der Lagerring (9) als Laufring des Wälzlagers ausgebildet ist.

6. Verstellantrieb nach einem der vorangehenden Ansprüche, **dadurch gekennzeichnet, dass** das Riemenrad (83) einen Nabenkörper (85) aufweist, mit dem mindestens ein Lagerring (9) verbunden ist.

7. Verstellantrieb nach einem der vorangehenden Ansprüche, **dadurch gekennzeichnet, dass** der Nabenkörper (85) ein Kunststoffmaterial und/oder ein Metall aufweist.

8. Verstellantrieb nach einem der vorangehenden Ansprüche, **dadurch gekennzeichnet, dass** der Lagerring (9) ein Blechformteil aufweist.

9. Verstellantrieb nach einem der vorangehenden Ansprüche, **dadurch gekennzeichnet, dass** eine Sensoreinrichtung (93, 94) zur Erfassung der Rotation der Riemenscheibe (83) vorgesehen ist.

10. Motorisch verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist, und mit einem Verstellantrieb (5, 6), der mit der Trageinheit (2) und mit der Stelleinheit (3) verbunden ist, und von dem die Stelleinheit (3) relativ zur Trageinheit (2) verstellbar ist,
**dadurch gekennzeichnet,**
**dass** der Verstellantrieb (5, 6) ausgebildet ist gemäß zumindest einem der Ansprüche 1 bis 9.

## Claims

1. Adjustment drive (6, 7) for a motor-adjustable steering column (1) for a motor vehicle, comprising a threaded spindle (52, 62) engaging in a spindle nut (51, 61) and having an axle (G), and a drive unit with a belt drive (8) which has a belt (84) which can be driven in rotation by a motor (55, 65), which runs around a circumferential belt running surface (86) of a belt wheel (83) which is non-rotatably connected to the spindle nut (52) or the threaded spindle (62) and which is mounted rotatably about the axis (G) in a bearing arrangement (87, 88, 9) which has at least one bearing ring (9) mounted axially on the belt wheel (83),
**characterized in**
**in that** the bearing ring (9) has a flanged pulley section (91) which projects radially beyond the belt running surface (86) and limits the width of the belt running surface (86).

2. Adjustment drive according to claim 1, **characterized in that** two bearing rings (9) are arranged axially on both sides of the belt running surface (86).

3. Adjustment drive according to one of the preceding claims, **characterized in that** the belt pulley (83) has a circumferential toothing (86), over which the flanged pulley section (91) projects radially.

4. Adjustment drive according to one of the preceding claims, **characterized in that** the bearing arrangement (87, 88, 9) is formed between the belt pulley (83) and a bearing housing (81).

5. Adjustment drive according to one of the preceding claims, **characterized in that** the bearing arrangement (97, 88, 9) comprises a rolling bearing, the bearing ring (9) being designed as a race of the rolling bearing.

6. Adjustment drive according to one of the preceding claims, **characterized in that** the belt wheel (83) has a hub body (85) to which at least one bearing ring (9) is connected.

7. Adjustment drive according to one of the preceding claims, **characterized in that** the hub body (85) comprises a plastic material and/or a metal.

8. Adjustment drive according to one of the preceding claims, **characterized in that** the bearing ring (9) comprises a sheet metal part.

9. Adjustment drive according to one of the preceding claims, **characterized in that** a sensor device (93, 94) is provided for detecting the rotation of the pulley (83).

10. Motor-adjustable steering column (1) for a motor vehicle, having a support unit (2), which can be attached to a vehicle body, and by which an adjusting unit (3) is held, in which a steering spindle (32) is mounted rotatably about a longitudinal axis (L), and having an adjustment drive (5, 6), which is connected to the support unit (2) and to the adjusting unit (3), and by which the adjusting unit (3) can be adjusted relative to the support unit (2),
**characterized in**
**in that** the adjustment drive (5, 6) is designed in accordance with at least one of claims 1 to 9.

## Revendications

1. Entraînement de réglage (6, 7) pour une colonne de direction (1) réglable par moteur pour un véhicule automobile, comprenant une broche filetée (52, 62) s'engageant dans un écrou de broche (51, 61) avec un axe (G), et une unité d'entraînement avec un entraînement par courroie (8), qui présente une courroie (84) pouvant être entraînée en rotation par un moteur (55, 65), qui tourne autour d'une surface de roulement de courroie (86) périphérique d'une roue de courroie (83) reliée de manière solidaire en rotation à l'écrou de broche (52) ou à la broche filetée (62), laquelle roue de courroie est logée de manière rotative autour de l'axe (G) dans un dispositif de palier (87, 88, 9) qui présente au moins une bague de palier (9) montée axialement sur la roue de courroie (83),
**caractérisé en ce que**
**en ce que** la bague de palier (9) présente une section de poulie à rebord (91) dépassant radialement de la surface de roulement de la courroie (86) et limitant la largeur de la surface de roulement de la courroie (86).

2. Entraînement de réglage selon la revendication 1, **caractérisé en ce que** deux bagues de palier (9) sont disposées axialement de part et d'autre de la surface de roulement de la courroie (86).

3. Entraînement de réglage selon l'une des revendications précédentes, **caractérisé en ce que** la poulie (83) présente une denture périphérique (86) au-delà de laquelle la section de poulie à rebord (91) fait saillie radialement.

4. Entraînement de réglage selon l'une des revendications précédentes, **caractérisé en ce que** l'agencement de palier (87, 88, 9) est formé entre la poulie (83) et un logement de palier (81).

5. Entraînement de réglage selon l'une des revendications précédentes, **caractérisé en ce que** l'agencement de palier (97, 88, 9) comprend un palier à roulement, la bague de palier (9) étant conçue comme une bague de roulement du palier à roulement.

6. Entraînement de réglage selon l'une des revendications précédentes, **caractérisé en ce que** la roue à courroie (83) présente un corps de moyeu (85) auquel est reliée au moins une bague de roulement (9).

7. Entraînement de réglage selon l'une des revendications précédentes, **caractérisé en ce que** le corps de moyeu (85) présente un matériau plastique et/ou un métal.

8. Entraînement de réglage selon l'une des revendications précédentes, **caractérisé en ce que** la bague de palier (9) présente une pièce moulée en tôle.

9. Entraînement de réglage selon l'une des revendications précédentes, **caractérisé en ce qu'**un dispositif de détection (93, 94) est prévu pour détecter la rotation de la poulie (83).

10. Colonne de direction (1) réglable par moteur pour un véhicule automobile, comprenant une unité de support (2) qui peut être montée sur une carrosserie de véhicule et par laquelle est maintenue une unité de réglage (3) dans laquelle un arbre de direction (32) est monté de manière à pouvoir tourner autour d'un axe longitudinal (L), et comprenant un entraînement de réglage (5, 6) qui est relié à l'unité de support (2) et à l'unité de réglage (3), et par lequel l'unité de réglage (3) peut être réglée par rapport à l'unité de support (2),
**caractérisé en ce que**
**en ce que** l'entraînement de réglage (5, 6) est réalisé selon au moins l'une des revendications 1 à 9.
